# EUROPÄISCHE PATENTANMELDUNG

(11) **EP 2 083 190 A2**
(43) Veröffentlichungstag der Anmeldung: **29.07.2009**
(21) Anmeldenummer: 09000765.9
(22) Anmeldetag: 21.01.2009
(51) Int. Cl.: F16D 65/56

(54) **Scheibenbremse mit Rutschkupplung für die Nachstelleinrichtung**

(30) Priorität: 22.01.2008 DE 102008005454
(71) Anmelder: KNORR-BREMSE Systeme für Nutzfahrzeuge GmbH, 80809 München (DE)
(72) Erfinder: Camilo-Martinez, José, 82008 Unterhaching (DE); Weggartner, Robert, 84367 Tann (DE); Kempinger, Georg, 81827 München (DE)
(74) Vertreter: Mattusch, Gundula

(57) **Zusammenfassung**

Eine Scheibenbremse, die einen Bremssattel (2) umfasst, in dem eine Bremsscheibe (1) und zwei beidseitig der Bremsscheibe (1) angeordnete Bremsbeläge (3, 4) montiert sind, und die zur Kompensierung des Verschleißes der Bremsbeläge (3, 4) mit einer Nachstellvorrichtung ausgestattet ist, die mindestens eine Nachstellspindel (6, 7) aufweist, der eine beim Überschreiten eines bestimmten Drehmomentes ansprechende Rutschkupplung (10) zugeordnet ist, soll in einfacher Weise so gestaltet werden, dass die Kupplung auch beim mehrmaligen Überschreiten des bestimmten Drehmomentes weder verschlissen noch zerstört ist.

Erfindungsgemäß besteht die Rutschkupplung (10) aus zwei Kupplungshälften (11, 12), die mit ineinander greifenden Stirnverzahnungen (13, 14) versehen sind. Mittels eines Kraftspeichers (18) wird eine Kupplungshälfte (12) derart belastet, dass die andere Kupplungshälfte (11) beim Überschreiten des bestimmten Drehmomentes verdrehbar ist.

Die Scheibenbremse ist besonders für Nutzfahrzeuge geeignet.

## Beschreibung

Die Erfindung betrifft eine Scheibenbremse, die einen Bremssattel umfasst, in dem eine Bremsscheibe und zwei beidseitig der Bremsscheibe angeordnete Bremsbeläge montiert sind, und die zur Kompensierung des Verschleißes der Bremsbeläge mit einer Nachstellvorrichtung ausgestattet ist, die mindestens eine Nachstellspindel aufweist, der eine beim Überschreiten eines bestimmten Drehmomentes ansprechende Rutschkupplung zugeordnet ist.

Eine derartige Bremse ist aus der EP 0 566 008 A1 bekannt.

Die in Rede stehende Fahrzeugbremse ist besonders für Nutzfahrzeuge ausgelegt. Bei diesen Fahrzeugen werden die Bremsbeläge aufgrund der hohen abzubremsenden Massen stark belastet. Der Verschleiß der Bremsbeläge ist demzufolge entsprechend hoch. Die Nachstelleinrichtung ist so ausgelegt, dass entsprechend der Abnutzung der Bremsbeläge eine Nachstellung erfolgt.

Beim Wechseln der Bremsbeläge kann es aufgrund der Auslegung der Nachstellvorrichtung zum Überschreiten eines zulässigen Drehmomentes der inneren Mechanik kommen. Dieses Drehmoment wird über die manuelle Rückstelleinrichtung bzw. die Nachstellspindel eingeleitet. Wird dabei ein bestimmtes Drehmoment überschritten, spricht die Rutschkupplung an. Diese könnte auch als Sicherheits- oder Überlastkupplung bezeichnet werden. Bei der in Rede stehenden Scheibenbremse hat sie die Aufgabe, die inneren Bauteile der Nachstellvorrichtung gegen eine Beschädigung oder gegen eine Zerstörung zu sichern.

Rutschkupplungen sind allgemein bekannt. Von der Funktion her unterscheidet man Reibkupplungen mit einer konstanten Anpresskraft, die jedoch auch einstellbar sein kann. Gemäß einer anderen Bauform werden auch sogenannten Lamellenkupplungen verwendet. Die Lamellen bestehen entweder aus Stahl, wobei sie jedoch auch noch mit Reibbelägen versehen sein können. Die Anpresskraft wird durch geeignete Federn erzeugt.

Der vorliegenden Erfindung liegt die Aufgabe zugrunde, eine Scheibenbremse der eingangs näher beschriebenen Art so zu gestalten, dass die Rutschkupplung in kostengünstiger Weise hergestellt werden kann, und dass sichergestellt ist, dass auch bei mehreren Überlastungen die Rutschkupplung weder zerstört noch verschlissen ist.

Die gestellte Aufgabe wird dadurch gelöst, dass die Rutschkupplung nach Art einer zwei Kupplungshälften aufweisenden Zahnkupplung ausgebildet ist, dass die Kupplungshälften an den einander zugewandten Seiten mit formschlüssig ineinander greifenden Stirnverzahnungen versehen sind, und dass eine Kupplungshälfte mittels eines Kraftspeichers derart belastet ist, dass bei Überschreiten des bestimmten Drehmomentes die Kupplungshälften gegeneinander verdrehbar sind.

Der Kraftspeicher ist so ausgelegt, dass die Kupplungshälften erst dann gegeneinander verdrehbar sind, wenn das vorbestimmte Drehmoment überschritten wird. Die Stirnverzahnungen sind so ausgelegt, dass sich eine der Kupplungshälften beim Überschreiten des Drehmomentes in axialer Richtung verschieben kann, so dass die Stirnverzahnungen außer Eingriff und nach einem relativ geringen Drehwinkel wieder in Eingriff kommen. Je nach Größe des einwirkenden Drehmomentes werden dabei mehrere Zähne übersprungen.

Die Kupplungshälften sind zylindrisch ausgebildet. Es ist zur gegenseitigen Verdrehung vorgesehen, dass eine Kupplungshälfte einen zentrischen Lagerzapfen aufweist, auf dem die andere Kupplungshälfte aufgesetzt ist. Dabei ist es dann vorteilhaft, wenn die der Nachstellvorrichtung abgewandte Kupplungshälfte topf förmig ausgebildet ist und den zentrischen Lagerzapfen aufweist, und dass die der Nachstellvorrichtung zugewandte Kupplungshälfte nach Art einer Flanschhülse ausgebildet ist, und dass die Hülse auf den Lagerzapfen gelagert ist. Dabei ist es vorteilhaft, dass die als Flanschhülse ausgebildete Kupplungshälfte zumindest teilweise innerhalb der topfförmig ausgebildeten Kupplungshälfte liegt, so dass eine äußerst kompakte Bauweise gegeben ist. Die Stirnverzahnungen beschreiben dann noch einen Kreisring.

Es sollte vermieden werden, das zumindest die Nachstellvorrichtung der Scheibenbremse vor einem unberechtigten Zugriff geschützt ist. Es ist deshalb vorgesehen, dass die Hülse der Flanschhülse an dem der Nachstellvorrichtung zugewandten Bereich zur Verbindung mit der Nachstellvorrichtung eine Verzahnung aufweist, die vorzugsweise aus Längsstegen und Längsnuten besteht. Diese Verzahnung sollte eine Sonderverzahnung sein, da dadurch der unberechtigte Zugriff praktisch unmöglich wird. Es ist ferner vorgesehen, dass diese Verzahnung im Inneren der Hülse vorgesehen ist.

Da eine kompakte Bauweise angestrebt wird, wobei jedoch die Anpresskraft des Kraftspeichers ausreichend sein soll, ist vorgesehen, dass der Kraftspeicher aus wenigstens einer Tellerfeder besteht, die auf den hülsenförmigen Teil der als Flanschhülse ausgebildeten Kupplungshälfte aufgesetzt ist. Die Vorspannung einer Tellerfeder wird durch deren Verformung erreicht. Durch die spezielle Form der Tellerfedern werden dabei relativ hohe Rückstellkräfte aufgebracht.

Die innere Verzahnung der Hülse der Flanschhülse bildet die Schnittstelle zwischen der Rutschkupplung und der Nachstellvorrichtung. Daraus ergibt sich der große Vorteil, dass die Rutschkupplung im Bordwerkzeug des Fahrzeuges mitgeführt werden kann und dann beim Wechseln der Bremsbeläge mit der Nachstellvorrichtung gekoppelt werden kann. Ferner ist vorteilhaft, dass dadurch die Nachstelleinrichtung nicht mehr mittels handelsüblicher Werkzeuge verstellt werden kann. Damit die Kupplungshälften sowie der Kraftspeicher eine Baueinheit bilden, ist vorgesehen, dass in der Innenfläche des Mantels der topfförmigen Kupplungshälfte eine Nut vorgesehen ist, in die ein Sicherungsring eingesetzt ist. Diese Sicherung ist äußerst einfach, da Bauteile beispielsweise mit Gewinde oder ähnlichen Profilierungen entfallen.

Damit im Falle des Überschreitens des zulässigen Drehmomentes die Verschiebung einer Kupplungshälfte begünstigt wird, ist vorgesehen, dass die Stirnverzahnungen der Kupplungshälften aus im Querschnitt dreieckigen Zähnen und entsprechenden Zahnlücken bestehen. Durch die Schrägstellung der Flanken gegenüber der Mittellängsachse wird die axiale Verschiebung der Kupplungshälfte begünstigt.

Zur Einstellung der Baueinheit ist noch vorgesehen, dass die der Nachstellvorrichtung abgewandte Kupplungshälfte an der äußeren Seite einen Mehrkantzapfen, vorzugsweise einen Sechskantzapfen aufweist.

Anhand der beiliegenden Zeichnungen wird die Erfindung noch näher erläutert.

Es zeigen:
- Figur 1: die Zuspanneinrichtung und die innerhalb des Bremssattels angeordnete Bremsscheibe mit den Bremsbelägen der erfindungsgemäßen Scheibenbremse im Längsschnitt
- Figur 2: die Rutschkupplung der erfindungsgemäßen Scheibenbremse in einer sprengbildlichen Darstellung
- Figur 3: die Rutschkupplung gemäß der Figur 2 im montierten Zustand in Schnittdarstellung und
- Figur 4: eine der Figur 3 entsprechende Draufsicht, mit Blick auf die der nicht dargestellten Nachstellvorrichtung abgewandte Kupplungshälfte.

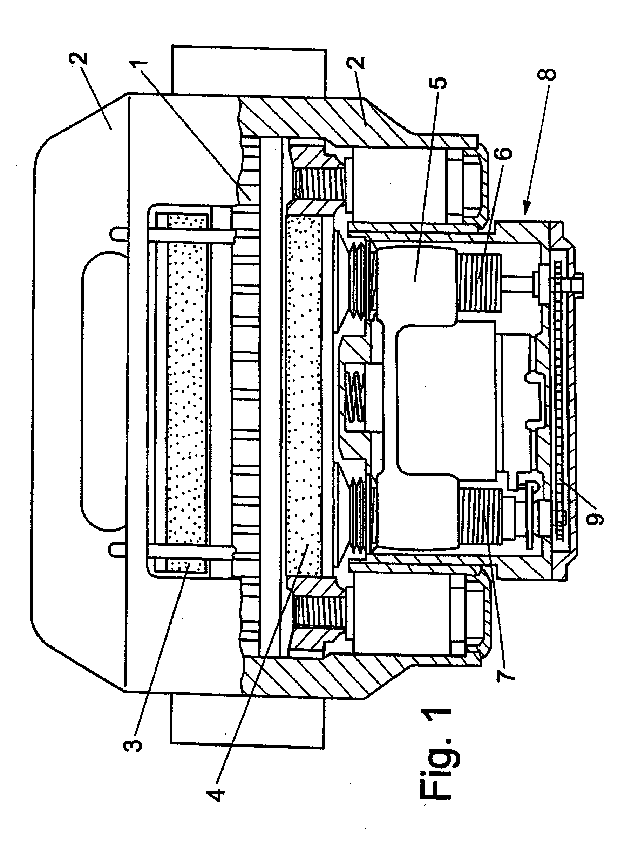

Die Figur 1 zeigt, dass eine auf einer nicht dargestellten Achse eines Nutzfahrzeuges aufgesetzte Bremsscheibe 1 in einem Bremssattel 2 angeordnet ist. Beidseitig der Bremsscheibe 1 sind die Bremsbeläge 3, 4 montiert. Die Scheibenbremse ist ferner vorzugsweise mit einer Traverse 5 ausgestattet, in der zwei parallel und im Abstand zueinander angeordnete Nachstellspindeln 6, 7 montiert sind. Durch das Bezugszeichen 8 ist die gesamte Zuspannvorrichtung bezeichnet. Die beiden Nachstellspindeln 6, 7 sind über eine Synchronisationseinrichtung, im dargestellten Ausführungsbeispiel durch einen Kettentrieb 9, synchron miteinander gekoppelt. Eine komplette Scheibenbremse ist beispielsweise in der EP 0 566 008 A1 beschrieben.

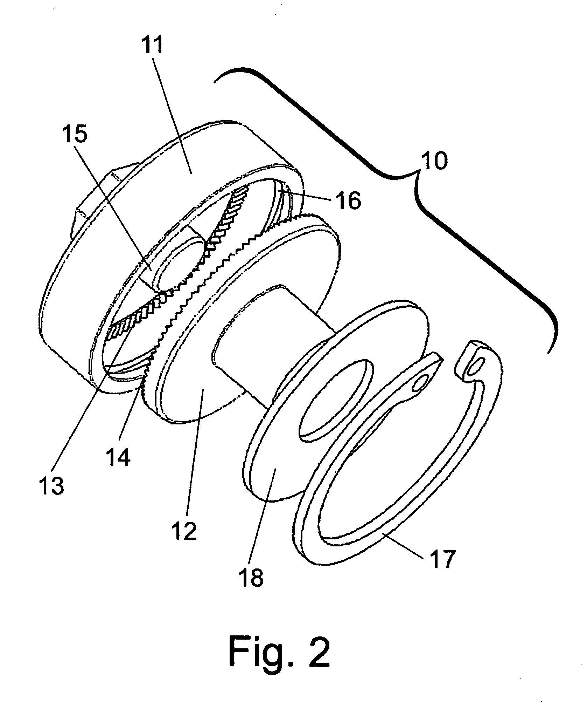

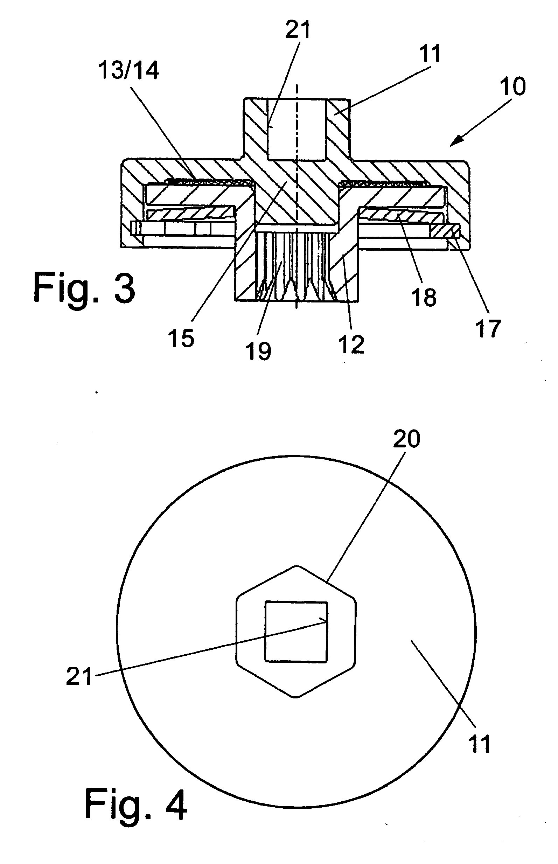

Wie die Figuren 2 und 3 zeigen, besteht die Rutschkupplung 10 aus den beiden Kupplungshälften 11 und 12. Die Kupplungshälfte 11 ist topfförmig ausgebildet und an der der Kupplungshälfte 12 zugewandten Seite mit einer Verzahnung 13 in Form eines Zahnkranzes versehen. Die Kupplungshälfte 12 ist als Flanschhülse ausgebildet und der Flansch dieser Flanschhülse ist an der der Kupplungshälfte 11 zugewandten Seite mit einer zur Verzahnung 13 gebildeten Verzahnung 14 versehen. Wie die Figur 3 zeigt, stehen diese Verzahnungen im Betriebszustand der Rutschkupplung 10 miteinander in Eingriff.

Die topfförmige Kupplungshälfte 11 ist mit einem zentrischen Lagerzapfen 15 versehen, auf dem die Kupplungshälfte 12 gelagert ist. In die Innenfläche des Mantels der Kupplungshälfte 11 ist angrenzend an den offenen Bereich eine Nut 16 vorgesehen, in die ein Sicherungsring 17 eingesetzt ist. Zwischen diesem Sicherungsring 17 und der Kupplungshälfte 12 ist eine Tellerfeder 18 aufgesetzt, die die beiden Kupplungshälften 11, 12 in Eingriff miteinander bringt.

Die Figur 3 zeigt besonders deutlich, dass die Hülse der Kupplungshälfte 12 mit einer inneren Verzahnung 19 versehen ist, die aus Längsstegen und Längsnuten besteht. Diese Verzahnung kann als Sonderverzahnung angesehen werden und dient der Verbindung mit der Nachstellvorrichtung. Durch diese Bauweise ist es auch noch möglich, dass die Rutschkupplung 10 von der Spindel 6 oder 7 abgenommen werden kann und dann im Fahrzeug mitgeführt wird.

Die Figuren 3 und 4 zeigen außerdem, dass die topfförmige Kupplungshälfte 11 an der der Kupplungshälfte 12 gegenüberliegenden Seite einen Sechskantzapfen 20 aufweist, in den ein Vierkantsackloch 21 eingearbeitet ist.

Die Kupplungshälfte 11 liegt der Nachstellvorrichtung 8 abgewandt, während die Kupplungshälfte 12 der Nachstellvorrichtung 8 zugewandt liegt.

Solange das auf die Rutschkupplung 10 beim Wechseln der Bremsbeläge 3, 4 einwirkende Drehmoment unter dem bestimmten bzw. zulässigen Drehmoment liegt, wird eine Drehbewegung der Kupplungshälfte 11 über die Verzahnung 13 auf die Kupplungshälfte 12 übertragen. Die Kupplungshälfte 12 ist formschlüssig über die Verzahnung 19 mit der Nachstellvorrichtung 8 verbunden. Sobald das auf die Rutschkupplung 10 einwirkende Drehmoment das bestimmte Drehmoment überschreitet, wird die Kupplungshälfte 11 in axialer Richtung durch die Kraft der Tellerfeder 18 verschoben. Dadurch kommen die Verzahnungen 13, 14 außer Eingriff, so dass sich die Kupplungshälfte 11 zusätzlich noch verdrehen kann. Die restlichen Bauteile der Rutschkupplung 10 und der gesamten Nachstellvorrichtung 8 verbleiben im ursprünglichen Zustand.

Die Erfindung ist nicht auf das dargestellte Ausführungsbeispiel beschränkt. Wesentlich ist, dass die Rutschkupplung 10 aus zwei Kupplungshälften 11, 12 besteht, die an den einander zugewandten Seiten mit kranzförmigen Verzahnungen 13, 14 versehen sind, die durch die Wirkung eines Kraftspeichers 18 ineinander greifen und bei Überschreiten eines bestimmten Drehmomentes außer Eingriff kommen, so dass die der Nachstellvorrichtung 8 abgewandte Kupplungshälfte 11 sich verdrehen kann, wodurch die restlichen Bauteile unbeeinflusst bleiben.

## Patentansprüche

1. Scheibenbremse, die einen Bremssattel (2) umfasst, in dem eine Bremsscheibe (1) und zwei beidseitig der Bremsscheibe (1) angeordnete Bremsbeläge (3, 4) montiert sind, und die zur Kompensierung des Verschleißes der Bremsbeläge (3, 4) mit einer Nachstellvorrichtung ausgestattet ist, die mindestens eine Nachstellspindel (6, 7) aufweist, der eine beim Überschreiten eines bestimmten Drehmomentes ansprechende Rutschkupplung (10) zugeordnet ist, **dadurch gekennzeichnet, dass** die Rutschkupplung (10) nach Art einer zwei Kupplungshälften (11, 12) aufweisenden Zahnkupplung ausgebildet ist, dass die Kupplungshälften (11, 12) an den einander zugewandten Seiten mit formschlüssig ineinander greifenden Stirnverzahnungen (13, 14) versehen sind, und dass eine Kupplungshälfte (12) mittels eines Kraftspeichers (18) derart belastet ist, dass bei Überschreiten des bestimmten Drehmomentes die Kupplungshälften (11, 12) gegeneinander verdrehbar sind.

2. Scheibenbremse nach Anspruch 1, **dadurch gekennzeichnet, dass** eine Kupplungshälfte (11) einen zentrischen Lagerzapfen (15) aufweist, auf dem die andere Kupplungshälfte (12) gelagert ist.

3. Scheibenbremse nach Anspruch 2, **dadurch gekennzeichnet, dass** die der Nachstellvorrichtung abgewandte Kupplungshälfte (11) topfförmig ausgebildet ist und den zentrischen Lagerzapfen (15) aufweist, und dass die der Nachstellvorrichtung zugewandte Kupplungshälfte (12) nach Art einer Flanschhülse ausgebildet ist.

4. Scheibenbremse nach Anspruch 3, **dadurch gekennzeichnet, dass** die Hülse der als Flanschhülse ausgebildeten Kupplungshälfte (11) zur Verbindung mit der Nachstellvorrichtung eine Verzahnung (19) aufweist, die vorzugsweise aus Längsstegen und Längsnuten gebildet ist.

5. Scheibenbremse nach einem oder mehreren der vorstehenden Ansprüche, **dadurch gekennzeichnet, dass** der Kraftspeicher aus wenigstens einer Tellerfeder (18) besteht, die auf den hülsenförmigen Teil der als Flanschhülse ausgebildeten Kupplungshälfte (12) aufgesetzt ist.

6. Scheibenbremse nach einem oder mehreren der vorstehenden Ansprüche, **dadurch gekennzeichnet, dass** in der Innenfläche des Mantels der topfförmigen Kupplungshälfte (11) eine Nut vorgesehen ist, die im Endbereich liegt und in die ein Sicherungsring (17) eingesetzt ist.

7. Scheibenbremse nach einem oder mehreren der vorstehenden Ansprüche, **dadurch gekennzeichnet, dass** die Stirnverzahnungen (13, 14) der Kupplungshälften (11, 12) aus im Querschnitt dreieckigen Zähnen und entsprechenden Zahnlücken gebildet sind.

8. Scheibenbremse nach einem oder mehreren der vorstehenden Ansprüche, **dadurch gekennzeichnet, dass** die der Nachstellvorrichtung abgewandte Kupplungshälfte (11) an der freien Außenseite einen Mehrkantzapfen, vorzugsweise einen Sechskantzapfen aufweist, der mit einem Vierkantsackloch (21) versehen ist.
